# EUROPÄISCHE PATENTANMELDUNG

(11) **EP 4 015 067 A1**
(43) Veröffentlichungstag der Anmeldung: **22.06.2022**
(21) Anmeldenummer: 20214160.2
(22) Anmeldetag: 15.12.2020
(51) Int. Cl.: B01D 53/94, B01J 23/63, B01J 35/00, B01J 37/02, F01N 3/035

(54) **KATALYTISCH AKTIVER PARTIKELFILTER MIT HOHER FILTRATIONSEFFIZIENZ**

(71) Anmelder: UMICORE AG & Co. KG, 63457 Hanau-Wolfgang (DE)
(72) Erfinder: SCHOENHABER, Jan, 64287 Darmstadt (DE); BRAUN, Carolin, 63225 Langen (DE); FRIEDRICH, Birgit, 64853 Otzberg (DE); MUELLER, Ralf, 36391 Sinntal (DE); ELLENBRAND, Sebastian, 36381 Schlüchtern (DE); BRADE, Ronja, 63165 Mühlheim am Main (DE); KLOSE, Norbert, 63571 Gelnhausen (DE); BRAND, Christian, 65207 Wiesbaden (DE); COLOMBO, Massimo, 60314 Frankfurt am Main (DE); GOTTHARDT, Meike Antonia, 60385 Frankfurt (DE)

(57) **Zusammenfassung**

Die vorliegende Erfindung betrifft einen Wandflussfilter zur Entfernung von Partikeln aus dem Abgas von Verbrennungsmotoren, das ein Wandflussfiltersubstrat der Länge L und voneinander verschiedene Beschichtungen Z und F umfasst,
wobei das Wandflussfiltersubstrat Kanäle E und A aufweist, die sich parallel zwischen einem ersten und einem zweiten Ende des Wandflussfiltersubstrats erstrecken, durch poröse Wände getrennt sind und Oberflächen O_{E} bzw. O_{A} bilden und wobei die Kanäle E am zweiten Ende und die Kanäle A am ersten Ende verschlossen sind und wobei sich die Beschichtung Z in den porösen Wänden und/oder auf den Oberflächen O_{A}, nicht aber auf den Oberflächen O_{E} befindet, und Palladium und/oder Rhodium und ein Cer/Zirkonium-Mischoxid umfasst und
wobei sich die Beschichtung F hauptsächlich auf den Oberflächen O_{E}, nicht aber auf den Oberflächen O_{A} befindet und eine Membran und kein Edelmetall umfasst, dadurch gekennzeichnet, dass das Massenverhältnis von Beschichtung Z zu Beschichtung F 0,1 bis 25 beträgt.

## Beschreibung

Die vorliegende Erfindung ist auf einen Wandflussfilter, ein Verfahren zu seiner Herstellung und seine Verwendung zur Minderung schädlicher Abgase eines Verbrennungsmotors gerichtet.

Zur Entfernung der Partikelemissionen und Reduzierung der Schadstoffe in Abgasen sind Dieselpartikelfilter bzw. Benzinpartikelfilter mit und ohne zusätzliche katalytisch aktive Beschichtung geeignete Aggregate. Dies sind Wandflusswabenkörper, die als Katalysatorträger, Träger oder Substratmonolithe bezeichnet werden. Zur Erfüllung der gesetzlichen Normen ist es für die aktuellen und zukünftigen Applikationen zur Abgasnachbehandlung von Verbrennungsmotoren aus Kostengründen, aber auch aus Bauraumgründen wünschenswert, Partikelfilter mit anderen katalytisch aktiven Funktionalitäten zu kombinieren. Die katalytisch aktive Beschichtung kann sich dabei auf der Oberfläche bzw. in den diese Oberfläche bildenden Wänden der Kanäle befinden. Die katalytisch aktive Beschichtung wird häufig in einem sogenannten Beschichtungsvorgang in Form einer Suspension auf den Katalysatorträger aufgebracht. Viele derartige Prozesse sind in der Vergangenheit von Autoabgaskatalysatorherstellern veröffentlicht worden, siehe zum Beispiel EP1064094B1, EP2521618B1, WO10015573A2, EP1136462B1, US6478874B1, US4609563A, WO9947260A1, JP5378659B2, EP2415522A1 und JP2014205108A2.
Der Einsatz eines Partikelfilters - ob katalytisch beschichtet oder nicht - führt zu einer im Vergleich zu einem Durchflussträger gleicher Abmessungen merklichen Erhöhung des Abgasgegendrucks und damit zu einer Verringerung des Drehmoments des Motors oder möglicherweise vermehrtem Kraftstoffverbrauch. Um den Abgasgegendruck nicht noch weiter zu erhöhen, werden die Mengen an oxidischen Trägermaterialien für die katalytisch aktiven Edelmetalle des Katalysators bzw. oxidischen Katalysatormaterialien bei einem Filter in der Regel in geringeren Mengen aufgebracht als bei einem Durchflussträger. Dadurch ist die katalytische Wirksamkeit eines katalytisch beschichteten Partikelfilters einem gleich groß dimensionierten Durchflussmonolithen häufig unterlegen.

Es hat schon einige Anstrengungen gegeben, Partikelfilter bereitzustellen, die eine gute katalytische Aktivität durch eine aktive Beschichtung aufweisen und dennoch einen möglichst geringen Abgasgegendruck zeigen. Im Hinblick auf einen niedrigen Abgasgegendruck hat es sich als günstig erwiesen, wenn sich die katalytisch aktive Beschichtung nicht als Schicht auf den Kanalwänden eines porösen Wandflussfilters befindet, sondern die Kanalwände des Filters mit dem katalytisch aktiven Material durchsetzt sind, siehe etwa WO2005016497A1, JPH01-151706 und EP1789190B1. Hierfür wird die Partikelgröße der katalytischen Beschichtung so gewählt, dass die Partikel in die Poren der Wandflussfilter eindringen und dort durch Kalzinieren fixiert werden können. Nachteilig an katalytisch aktiven Filtern mit einer In-Wand-Beschichtung ist, dass die Menge an katalytisch wirksamer Substanz durch das Aufnahmevermögen der porösen Wand begrenzt ist.
Es hat sich gezeigt, dass durch Aufbringen der katalytisch aktiven Substanzen auf die Oberflächen der Kanalwände eines Wandflusswabenkörpers eine Erhöhung der Umsetzung der Schadstoffe im Abgas erzielt werden kann. Auch Kombinationen von AufWand- und In-Wand-Beschichtung mit katalytisch aktivem Material sind möglich, wodurch die katalytische Performance weiter gesteigert werden kann, ohne dass sich der Staudruck wesentlich erhöht.

Neben der katalytischen Wirksamkeit ist eine weitere Funktionalität des Filters, die durch eine Beschichtung verbessert werden kann, seine Filtrationseffizienz, also die Filterwirkung selbst. In der WO2011151711A1 wird eine Methode beschrieben, mit der ein nicht beschichteter oder katalytisch beschichteter Filter, der das katalytische aktive Material in den Kanalwänden trägt (In-Wand-Beschichtung mit Washcoat) mit einem trockenen Aerosol beaufschlagt wird. Das Aerosol wird durch die Verteilung eines pulverförmigen mineralischen Materials bereitgestellt und mittels eines Gasstroms über die Einlassseite eines Wandflussfilters geführt. Hierbei agglomerieren die einzelnen Partikel mit einer Partikelgröße von 0,2 µm bis 5 µm zu einem verbrückten Netzwerk an Partikeln und werden als Schicht auf der Oberfläche der einzelnen den Wandflussfilter durchziehenden Einlasskanäle abgeschieden. Die typische Beladung eines Filters mit dem Pulver beträgt zwischen 5 g und 50 g pro Liter Filtervolumen. Es wird ausdrücklich darauf hingewiesen, dass es nicht erwünscht ist, mit dem Metalloxid eine Beschichtung in den Poren des Wandflussfilters zu erreichen.

Eine weitere Methode zur Erhöhung der Filtrationseffizienz von katalytisch nicht aktiven Filtern wird in der WO2012030534A1 beschrieben. Hierbei wird auf den Wänden der Strömungskanäle der Einlassseite eine Filtrationsschicht ("discriminating layer") durch Ablagerung von keramischen Partikel über ein Partikelaerosol erzeugt. Die Schichten bestehen aus Oxiden von Zirkonium, Aluminium oder Silizium, bevorzugt in Faserform von 1 nm bis 5 µm Länge und haben eine Schichtdicke von mehr als 10 µm, in der Regel 25 µm bis 75 µm. Nach dem Beschichtungsprozess werden die aufgetragenen Pulverpartikel in einem Wärmeprozess kalziniert.

Ein weiteres Verfahren bei dem zur Erhöhung der Filtrationseffizienz von katalytisch nicht aktiven Wandflussfiltern eine Membran ("trapping layer") auf den Oberflächen der Einlasskanäle von Filtern erzeugt wird, ist in der Patentschrift US8277880B2 beschrieben. Die Filtrationsmembran auf den Oberflächen der Einlasskanäle wird durch Durchsaugen eines mit Keramikpartikeln (z. B. Siliciumcarbid oder Cordierit) beladenen Gasstroms realisiert. Der Wabenkörper wird nach dem Aufbringen der Filterschicht bei Temperaturen von größer 1000°C gebrannt um die Haftfestigkeit der Pulverschicht auf den Kanalwänden zu erhöhen. In EP2502661A2 und EP2502662B1 werden weitere Aufwandbeschichtungen durch Pulverapplikation erwähnt.

Eine Beschichtung innerhalb der Poren eines Wandflussfiltersubstrats mittels Verdüsung von trockenen Partikeln wird in der US8388721B2 beschrieben. Hier soll allerdings das Pulver tief in die Poren eindringen. 20 % bis 60 % der Oberfläche der Wand soll für Rußpartikel zugänglich, demnach offenbleiben. Abhängig von der Strömungsgeschwindigkeit des Pulver-Gas-Gemisches kann ein mehr oder minder starker Pulvergradient zwischen Einlass- und Auslassseite eingestellt werden. Die Poren der Kanalwände des nach US8388721 B2 mit Pulver in den Poren beschichteten Filters können nachträglich mit einer katalytisch aktiven Komponente beschichtet werden. Auch hier befindet sich das katalytisch aktive Material in den Kanalwänden des Filters. Ebenfalls wird die Einbringung des Pulvers in die Poren, z. B. mithilfe eines Aerosolgenerators, in der EP2727640A1 beschrieben. Hier wird ein nicht katalytisch beschichteter Wandflussfilter mit einem z. B. Aluminiumoxidpartikel enthaltenden Gasstrom dergestalt beschichtet, dass die kompletten Partikel, die eine Partikelgröße von 0,1 µm bis 5 µm aufweisen, als poröse Füllung in den Poren des Wandflussfilters abgeschieden werden. Die Partikel selber können eine weitere Funktionalität des Filters zusätzlich zu der Filterwirkung realisieren. Beispielhaft werden diese Partikel in einer Menge von mehr als 80 g/l bezogen auf das Filtervolumen in den Poren des Filters abgeschieden. Sie füllen dabei 10% bis 50% des Volumens der gefüllten Poren in den Kanalwänden aus. Dieser Filter weist sowohl mit Ruß beladen wie auch ohne Ruß eine gegenüber dem unbehandelten Filter verbesserte Filtrationseffizienz bei einem geringeren Abgasgegendruck des mit Ruß beladenen Filters auf.

In der WO2018115900A1 werden Wandflussfilter mit einer ggf. trockenen synthetischen Asche dergestalt beschichtet, dass eine kontinuierliche Membranschicht auf den Wänden des ggf. katalytisch beschichteten Wandflussfilters entsteht.

Alle oben aufgeführten Patente des Standes der Technik haben das Ziel, die Filtrationseffizienz eines Filters durch eine Belegung des Filters mit einem Pulver zu erhöhen. Die derart optimierten Filter können auch vor der Pulverbeschichtung eine katalytisch aktive Beschichtung in den porösen Kanalwänden tragen. In keinem der Beispiele finden sich jedoch Hinweise darauf, gleichzeitig die katalytische Wirkung eines Filters und die Erhöhung der Filtrationseffizienz zu optimieren.
Es besteht daher weiterhin Bedarf an Partikelfiltern, bei denen sowohl die katalytische Aktivität und die Filtrationseffizienz im Hinblick auf den Abgasgegendruck optimiert sind. Aufgabe der vorliegenden Erfindung ist es, einen entsprechenden Partikelfilter zur Verfügung zu stellen, bei dem eine ausreichende Filtrationseffizienz mit einer möglichst geringen Erhöhung des Abgasgegendrucks und einer hohen katalytischen Aktivität gekoppelt ist.

Die vorliegende Erfindung betrifft einen Wandflussfilter zur Entfernung von Partikeln aus dem Abgas von Verbrennungsmotoren, das ein Wandflussfiltersubstrat der Länge L und voneinander verschiedene Beschichtungen Z und F umfasst,
wobei das Wandflussfiltersubstrat Kanäle E und A aufweist, die sich parallel zwischen einem ersten und einem zweiten Ende des Wandflussfiltersubstrats erstrecken, durch poröse Wände getrennt sind und Oberflächen O_{E} bzw. O_{A} bilden und wobei die Kanäle E am zweiten Ende und die Kanäle A am ersten Ende verschlossen sind und wobei sich die Beschichtung Z in den porösen Wänden und/oder auf den Oberflächen O_{A}, nicht aber auf den Oberflächen O_{E} befindet, und Palladium und/oder Rhodium und ein Cer/Zirkonium-Mischoxid umfasst und
wobei sich die Beschichtung F hauptsächlich auf den Oberflächen O_{E}, nicht aber auf den Oberflächen O_{A} befindet und eine Membran und kein Edelmetall umfasst,
dadurch gekennzeichnet, dass das Massenverhältnis von Beschichtung Z zu Beschichtung F 0,1 bis 25 beträgt.

Bei der bestimmungsgemäßen Verwendung des erfindungsgemäßen Wandflussfilters zur Reinigung von Abgas von Verbrennungsmotoren, fließt das Abgas an einem Ende in den Filter ein und verlässt es nach Durchtritt durch die porösen Wände an anderen Ende wieder. Tritt also zum Beispiel das Abgas am ersten Ende in den Filter ein, so bezeichnen die Kanäle E die Eingangskanäle oder anströmseitigen Kanäle. Nach Durchtritt durch die porösen Wände tritt es dann am zweiten Ende aus dem Filter aus, so dass die Kanäle A die Ausgangskanäle oder abströmseitigen Kanäle bezeichnen.

Als Wandflusssubstrat können alle aus dem Stand der Technik bekannten und auf dem Gebiet der Autoabgaskatalyse üblichen Wandflussfiltersubstrate eingesetzt werden. Bevorzugt werden poröse Wandflussfiltersubstrate aus Cordierit, Siliziumcarbid oder Aluminiumtitanat verwendet. Diese Wandflussfiltersubstrate weisen Kanäle E und Kanäle A auf, die wie oben beschrieben als Eingangskanäle, die auch Anströmkanäle genannt werden können, und als Ausgangskanäle, die auch Abströmkanäle genannt werden können, fungieren. Die abströmseitigen Enden der Anströmkanäle und die anströmseitigen Enden der Abströmkanäle sind gegeneinander versetzt mit in der Regel gasdichten "Stopfen" verschlossen. Hierbei wird das zu reinigende Abgas, das das Filtersubstrat durchströmt, zum Durchtritt durch die poröse Wand zwischen An- und Abströmkanal gezwungen, was eine Partikelfilterwirkung bedingt. Durch die Porosität, Poren-/Radienverteilung und Dicke der Wand kann die Filtrationseigenschaft für Partikel ausgelegt werden. Erfindungsgemäß beträgt die Porosität der unbeschichteten Wandflussfiltersubstrate in der Regel mehr als 40 %, zum Beispiel von 40 % bis 75 %, besonders von 50 % bis 70 % [gemessen nach DIN 66133 - neueste Fassung am Anmeldetag]. Die mittlere Porengröße d₅₀ der unbeschichteten Wandflussfiltersubstrate beträgt wenigstens 7 µm, zum Beispiel von 7 µm bis 34 µm, bevorzugt mehr als 10 µm, insbesondere mehr bevorzugt von 10 µm bis 25 µm oder ganz bevorzugt von 15 µm bis 20 µm [gemessen nach DIN 66134 neueste Fassung am Anmeldetag]], wobei unter dem d₅₀-Wert der Porengrößenverteilung des Wandflußfiltersubstrates zu verstehen ist, dass 50 % des gesamten, durch Quecksilberporosimetrie bestimmbaren, Porenvolumens gebildet werden durch Poren, deren Durchmesser kleiner oder gleich dem als d₅₀ angegebenen Wert ist. Im Falle der erfindungsgemäßen Wandflussfilter weisen die mit den Beschichtungen Z und F und gegebenenfalls Beschichtung Y (siehe unten) versehenen Wandflussfiltersubstrate besonders bevorzugt eine Porengröße d₅₀ von 10 µm bis 20 µm und eine Porosität von 45 % bis 65 % auf.

Dem Fachmann ist bekannt, dass aufgrund der Stopfen, die die Kanäle E und A gegeneinander versetzt verschießen, gegebenenfalls nicht die ganze Länge L des Wandflussfiltersubstrates zur Beschichtung zur Verfügung steht. So sind beispielsweise die Kanäle E am zweiten Ende des Wandflussfiltersubstrates verschlossen, so dass folglich die Oberfläche O_{E}, die zur Beschichtung zur Verfügung steht, geringfügig kleiner als die Länge L sein kann. Dies kommt selbstverständlich nur dann zum Tragen, wenn eine Beschichtung auf 100% der Länge L oder wenig darunter vorliegt. Nachstehend wird in diesen Fällen der Einfachheit halber trotzdem von 100% der Länge L gesprochen.

Sofern sich die Beschichtung Z auf den Oberflächen O_{A} des Wandflussfiltersubstrates befindet, erstreckt sie sich bevorzugt ausgehend vom zweiten Ende des Wandflussfiltersubstrates auf 50 bis 90 % der Länge L.
Bei der Beschichtung auf den Oberflächen O_{A} durch Beschichtung Z handelt es sich um eine sogenannte Aufwandbeschichtung. Darunter ist zu verstehen, dass sich die Beschichtung über die Oberflächen O_{A} in die Kanäle A des Wandflussfiltersubstrates erheben, den Kanalquerschnitt mithin erniedrigen. Die Dicke der Schicht Z liegt in der Regel bei 5 bis 250 µm, vorzugsweise 7,5 bis 225 µm und ganz bevorzugt bei 10 bis 200 µm, wobei die Dicke der Schicht bevorzugt in der Mitte eines jeweiligen Kanalstegs bestimmt wird und nicht in den Ecken. Zur Bestimmung der Schichtdicke eignen sich dem Fachmann bekannte, gängige Analysemethoden, wie zum Beispiel Rasterelektronen mikroskopie.
Die an die Oberflächen O_{A} angrenzenden Poren der porösen Wand werden bei einer Aufwandbeschichtung nur untergeordnet mit der Beschichtung Z gefüllt. Mehr als 80 %, bevorzugt mehr als 90 % der Beschichtung Z befindet sich nicht in der porösen Wand.

Sofern sich die Beschichtung Z in den porösen Wänden des Wandflussfiltersubstrates befindet, erstreckt sie sich bevorzugt ausgehend vom ersten Ende des Wandflussfiltersubstrates auf 50 bis 100 % der Länge L.
Bei der Beschichtung der porösen Wände durch Beschichtung Z handelt es sich um eine sogenannte Inwandbeschichtung. Dabei werden die an die porösen Wände angrenzenden Oberflächen O_{A} nur untergeordnet mit der Beschichtung Z beschichtet.

Die minimale Länge der Beschichtung Z beträgt mindestens 1,25 cm, vorzugsweise mindestens 2,0 cm und ganz bevorzugt mindestens 2,5 cm, gerechnet vom zweiten Ende des Wandflussfiltersubstrates.

Beschichtung Z kann einen Dickegradienten über die Länge L dergestalt aufweisen, dass die Dicke der Beschichtung Z entlang der Länge L des Wandflussfilters vom zweiten zum ersten Ende hin zunimmt. Dabei kann es sein, dass die Beschichtung vorzugsweise mehr als 2-mal, mehr bevorzugt bis zu mehr als 3-mal die Dicke an einem Beschichtungsende aufweist als am anderen Beschichtungsende. Die Dicke ist dabei die Höhe, mit der sich die Beschichtung Z über die Oberfläche O_{A} erhebt. Durch den Dickegradienten der Beschichtung auf den Kanalwänden erreicht man zudem, dass sich die Filtrationseffizienz über die gesamte Länge L des Filters angleicht. Eine gleichmäßigere Abscheidung des Rußes über die gesamte Filterwand und damit ein verbesserter Abgasgegendruckanstieg und ggf. ein besserer Abbrand des Rußes sind das Resultat.

Die Beschichtung Z kann aber auch einen Dickegradienten über die Länge L dergestalt aufweisen, dass die Dicke der Beschichtung Z entlang der Länge L des Wandflussfilters vom zweiten zum ersten Ende hin abnimmt. Dabei kann es sein, dass die Beschichtung vorzugsweise mehr als 2-mal, mehr bevorzugt bis zu mehr als 3-mal die Dicke an einem Beschichtungsende aufweist wie am anderen Beschichtungsende. Die Dicke ist dabei die Höhe, mit der sich die Beschichtung Z über die Oberfläche O_{A} erhebt. Durch den Dickegradienten der Beschichtung auf den Kanalwänden erreicht man zudem, dass sich die Filtrationseffizienz über die gesamte Länge L des Filters angleicht. Eine gleichmäßigere Abscheidung des Rußes über die gesamte Filterwand und damit ein verbesserter Abgasgegendruckanstieg und ggf. ein besserer Abbrand des Rußes sind das Resultat.

Die Beschichtung Z ist insbesondere aufgrund der Bestandteile Palladium und/oder Rhodium eine katalytisch aktive Beschichtung. Unter "katalytisch aktiv" wird im Rahmen vorliegender Erfindung die Fähigkeit verstanden, schädliche Bestandteile des Abgases von Verbrennungsmotoren in weniger schädliche zu verwandeln. Insbesondere sind hier die Abgasbestandteile NOₓ, CO und HC zu nennen. Folglich ist Beschichtung Z besonders bevorzugt Dreiwege-katalytisch aktiv, insbesondere bei Betriebstemperaturen von 250 bis 1100 °C.

Beschichtung Z enthält die Edelmetalle Palladium und/oder Rhodium, sowie ausnahmsweise auch Platin als weiteres Edelmetall. Bevorzugt enthält Beschichtung Z Palladium und Rhodium und kein Platin.
In einer weiteren Ausführungsform enthält Beschichtung Z die Edelmetalle Platin und/oder Rhodium, wobei nur ausnahmsweise auch Palladium als weiteres Edelmetall vorliegt.
In einer weiteren Ausführungsform enthält Beschichtung Z die Edelmetalle Platin, Palladium und gegebenfalls Rhodium. In dieser Ausführungsform ist es vorteilhaft, wenn das Massenverhältnis von Platin zu Palladium 15:1 bis 1:15 beträgt, insbesondere 10:1 bis 1:10.

Bezogen auf das erfindungsgemäße Partikelfilter ist der Anteil von Rhodium am gesamten Edelmetallgehalt insbesondere größer oder gleich 5 Gew.-% , bevorzugt größer oder gleich 10 Gew.-%. Beispielsweise ist der Anteil von Rhodium am gesamten Edelmetallgehalt 5 bis 20 Gew.-% oder 5 bis 15 Gew.-%. Die Edelmetalle werden üblicherweise in Mengen von 0,10 bis 5 g/l, bezogen auf das Volumen des Wandflussfiltersubstrates eingesetzt.

Die Edelmetalle sind üblicherweise auf einem oder mehreren Trägermaterialien fixiert. Als Trägermaterialien kommen alle dem Fachmann für diesen Zweck geläufigen Materialien in Betracht. Solche Materialien sind insbesondere Metalloxide mit einer BET-Oberfläche von 30 bis 250 m²/g, bevorzugt von 100 bis 200 m²/g (bestimmt nach DIN 66132 - neueste Fassung am Anmeldetag). Besonders geeignete Trägermaterialien für die Edelmetalle sind ausgewählt aus der Reihe bestehend aus Aluminiumoxid, dotiertes Aluminiumoxid, Siliziumoxid, Titandioxid und Mischoxiden aus einem oder mehreren davon. Dotierte Aluminiumoxide sind beispielsweise Lanthanoxid-, Zirkoniumoxid- Bariumoxid- und/oder Titanoxid-dotierte Aluminiumoxide. Mit Vorteil wird Aluminiumoxid oder Lanthan-stabilisiertes Aluminiumoxid eingesetzt, wobei im letztgenannten Fall Lanthan in Mengen von insbesondere 1 bis 10 Gew.-%, bevorzugt 3 bis 6 Gew.-%, jeweils berechnet als La₂O₃ und bezogen auf das Gewicht des stabilisierten Aluminiumoxides, verwendet wird.
Auch im Fall von mit Bariumoxid dotiertem Aluminiumoxid ist der Anteil an Bariumoxid insbesondere 1 bis 10 Gew.-%, bevorzugt 3 bis 6 Gew.-%, jeweils berechnet als BaO und bezogen auf das Gewicht des stabilisierten Aluminiumoxides.

Ein weiteres geeignetes Trägermaterial ist Lanthan-stabilisiertes Aluminiumoxid, dessen Oberfläche mit Lanthanoxid, mit Bariumoxid und/oder mit Strontiumoxid beschichtet ist.
Beschichtung Z umfasst bevorzugt mindestens ein Aluminiumoxid oder dotiertes Aluminiumoxid.

Beschichtung Z enthält mindestens ein Cer/Zirkonium-Mischoxid, das als Sauerstoffspeicherkomponente fungiert. Das Masseverhältnis von Ceroxid zu Zirkoniumoxid kann in diesen Produkten in weiten Grenzen variieren. Es beträgt beispielsweise 0,1 bis 1,5, bevorzugt 0,15 bis 1 oder 0,2 bis 0,9.

Bevorzugte Cer/Zirkonium-Mischoxide umfassen ein oder mehrerer Seltenerdmetalloxide und können somit als Cer/Zirkonium/Seltenerdmetall-Mischoxide bezeichnet werden. Der Begriff "Cer/Zirkonium/Seltenerdmetall-Mischoxid" im Sinne vorliegender Erfindung schließt physikalische Mischungen aus Ceroxid, Zirkoniumoxid und Seltenerdoxid aus. Vielmehr sind "Cer/Zirkonium/Seltenerdmetall-Mischoxide" durch eine weitgehend homogene, dreidimensionale Kristallstruktur gekennzeichnet, die idealerweise frei ist von Phasen aus reinem Ceroxid, Zirkoniumoxid bzw. Seltenerdoxid (feste Lösung). Je nach Herstellungsverfahren können aber auch nicht vollständig homogene Produkte entstehen, die in der Regel ohne Nachteil verwendet werden können. Analoges gilt für Cer/Zirkonium-Mischoxide, die kein Seltenerdmetalloxid enthalten. Im Übrigen umfasst der Begriff Seltenerdmetall bzw. Seltenerdmetalloxid im Sinne vorliegender Erfindung kein Cer bzw. kein Ceroxid.
Als Seltenerdmetalloxide in den Cer/Zirkonium/Seltenerdmetall-Mischoxiden kommen beispielsweise Lanthanoxid, Yttriumoxid, Praseodymoxid, Neodymoxid und/oder Samariumoxid in Betracht. Bevorzugt sind Lanthanoxid, Yttriumoxid und/oder Praseodymoxid. Besonders bevorzugt sind Lanthanoxid und/oder Yttriumoxid und ganz besonders bevorzugt sind Lanthanoxid und Yttriumoxid, Yttriumoxid und Praseodymoxid, sowie Lanthanoxid und Praseodymoxid. In Ausführungsformen der vorliegenden Erfindung sind die Sauerstoffspeicherkomponenten frei von Neodymoxid.

Der Anteil an Seltenerdmetalloxid in den Cer/Zirkonium/Seltenerdmetall-Mischoxiden liegt insbesondere bei 3 bis 20 Gew.-% bezogen auf das Cer/Zirkonium/Seltenerdmetall-Mischoxid.

Sofern die Cer/Zirkonium/Seltenerdmetall-Mischoxide als Seltenerdmetall Yttriumoxid enthalten, so ist dessen Anteil bevorzugt 4 bis 15 Gew.-% bezogen auf das Cer/Zirkonium/Seltenerdmetall-Mischoxid. Sofern die Cer/Zirkonium/Seltenerdmetall-Mischoxide als Seltenerdmetall Praseodymoxid enthalten, so ist dessen Anteil bevorzugt 2 bis 10 Gew.-% bezogen auf das Cer/Zirkonium/Seltenerdmetall-Mischoxid. Sofern die Cer/Zirkonium/Seltenerdmetall-Mischoxide als Seltenerdmetall Lanthanoxid und ein weiteres Seltenerdoxid enthalten, wie zum Beispiel Yttriumoxid pder Praseodymoxid, so ist deren Massenverhältnis insbesondere 0,1 bis 1,25, bevorzugt 0,1 bis 1.

Üblicherweise enthält die Beschichtung Z Sauerstoffspeicherkomponenten in Mengen von 15 bis 120 g/l, bezogen auf das Volumen des Wandflussfiltersubstrates. Das Masseverhältnis von Trägermaterialien und Sauerstoffspeicherkomponenten in der Beschichtung Z beträgt üblicherweise 0,25 bis 1,5, beispielsweise 0,3 bis 1,3.

In einer Ausführungsform beträgt das Gewichtsverhältnis der Summe der Massen aller Aluminiumoxide (einschließlich dotierter Aluminiumoxide) zur Summe der Massen aller Cer/Zirkonium-Mischoxide in Beschichtung Z 10:90 bis 75:25.

Beispielsweise umfasst die Beschichtung Z Lanthan-stabilisiertes Aluminiumoxid, Rhodium, Palladium oder Palladium und Rhodium und ein Cer/Zirkonium/Seltenerdmetall-Mischoxid, das Yttriumoxid und Lanthanoxid als Seltenerdmetalloxide enthält.
In anderen Ausführungsformen der vorliegenden Erfindung umfasst die Beschichtung Z Lanthan-stabilisiertes Aluminiumoxid, Rhodium, Palladium oder Palladium und Rhodium und ein Cer/Zirkonium/Seltenerdmetall-Mischoxid, das Praseodymoxid und Lanthanoxid als Seltenerdmetalloxide enthält.
In anderen Ausführungsformen der vorliegenden Erfindung umfasst die Beschichtung Z Lanthan-stabilisiertes Aluminiumoxid, Rhodium, Palladium oder Palladium und Rhodium, ein Cer/Zirkonium/Seltenerdmetall-Mischoxid, das Praseodymoxid und Lanthanoxid als Seltenerdmetalloxide enthält und ein zweites Cer/Zirkonium/Seltenerdmetall-Mischoxid, das Yttriumoxid und Lanthanoxid als Seltenerdmetalloxide enthält.

Die Beschichtung Z enthält bevorzugt keinen Zeolithen und kein Molsieb.

Sofern Beschichtung Z Aluminiumoxid bzw. dotiertes Aluminiumoxid enthält, ist das Gewichtsverhältnis der Summe der Massen aller Aluminiumoxide bzw. dotierten Aluminiumoxiden zur Summe der Massen aller Cer/Zirkonium-Mischoxide bzw. Cer/Zirkonium/Seltenerdmetall-Mischoxide insbesondere 10:90 bis 75:25.

Beschichtung F umfasst erfindungsgemäß eine Membran. Darunter wird im Rahmen der vorliegenden Erfindung eine definierte Schicht verstanden, die die effektive Porengröße des keramischen Filtersubstrates herabsetzt und vereinheitlicht und dadurch die Filtrationsleistung verbessert. Insbesondere ist die Membran eine zusammenhängende Schicht mit einer Schichtdicke von 1 bis 150 µm.
Beschichtung F umfasst kein Edelmetall und ist damit nicht katalytisch aktiv im Sinne vorliegender Erfindung. Sie ist somit nicht in der Lage, die Abgaskomponenten CO und HC zu oxidieren und NOₓ zu reduzieren.

Die Membran der Beschichtung F umfasst beispielsweise ein partikelförmiges Oxid eines Elementes ausgewählt aus der Gruppe bestehend aus Silizium, Aluminium, Titan, Zirkonium, Cer, Yttrium, Praseodym, Strontium, Bismut, Neodym, Lanthan und Barium oder eine Mischung aus zwei oder mehr der genannten Oxide.
Bevorzugt umfasst die Membran der Beschichtung F eine Komponente A, die Aluminiumoxid oder Siliziumoxid oder Titanoxid umfasst und einen Anteil von mehr als 50% an der Gesamtmasse der Beschichtung F aufweist, sowie eine Komponente B die ein Oxid der Elemente Cer, Zirkon, Barium oder Lanthan oder eine Mischung aus zwei oder mehr der genannten Oxide umfasst und einen Anteil von weniger als 50% an der Gesamtmasse der Beschichtung F aufweist.
Beispielweise weist Komponente A einen Anteil von 55% und Komponente B einen Anteil von 45% an der Gesamtmasse der Beschichtung F auf. Andere mögliche Anteile sind 60% A und 40% B, 65% A und 35% B, 70% A und 30% B, 75% A und 25% B, 80% A und 20% B, 85% A und 15% B und 90% A und 10% B.

Besonders bevorzugt besteht die Beschichtung F aus Aluminiumoxid.

Erfindungsgemäß befindet sich die Beschichtung F hauptsächlich auf den Oberflächen O_{E}, nicht aber auf den Oberflächen O_{A}. Dies bedeutet insbesondere, dass sich mehr als 50% der Gesamtmasse der Beschichtung F auf den Oberflächen O_{E} befinden. Bevorzugt befinden sich 55 bis 100% der Gesamtmasse der Beschichtung F, besonders bevorzugt 75 bis 95% auf den Oberflächen O_{E}. Der Teil der Beschichtung F, der sich nicht auf den Oberflächen O_{E} befindet, befindet sich in den porösen Wänden.

Beschichtung F besteht bevorzugt aus einer zusammenhängenden Membran auf den Oberflächen O_{E}. Sie erstreckt sich insbesondere über die gesamte Länge L des Filtersubstrats.
Die Membran der Beschichtung F ist besonders bevorzugt eine zusammenhängende, poröse Schicht mit einer Porosität von 25-80%, bevorzugt 40-70%. Die mittlere Porengröße d₅₀ der Membran beträgt wenigstens 50 nm, zum Beispiel von 50 nm bis 10 µm, bevorzugt mehr als 100 nm bis 9 µm, insbesondere mehr bevorzugt von 200 nm µm bis 8 µm, wobei unter dem d₅₀-Wert der Porengrößenverteilung zu verstehen ist, dass 50 % des gesamten, durch Quecksilberporosimetrie bestimmbaren, Porenvolumens gebildet werden durch Poren, deren Durchmesser kleiner oder gleich dem als d₅₀ angegebenen Wert ist.
Im Übrigen ist es bevorzugt, wenn die mittlere Porengröße d₅₀ der Membran kleiner ist als die mittlere Porengröße d₅₀ des Wandflussfiltersubstrats. Bevorzugt beträgt das Verhältnis des d₅₀ der mittleren Porengröße der Membranbeschichtung F zu dem d₅₀ des Wandflussfiltersubstrats 0,005 bis 0,9, bevorzugt 0,01 bis 0,8 und besonders bevorzugt 0,02 bis 0,6.

Die Beschichtung F weist vorteilhafterweise eine Masse von unter 150 g/l auf, bevorzugt 5 bis 130 g/l, besonders bevorzugt 10 bis 100 g/L, jeweils bezogen auf das Volumen des Wandflussfiltersubstrats.

Es ist darüber hinaus von Vorteil, wenn das Massenverhältnis von Beschichtung Z zu Beschichtung F bevorzugt 0,1 bis 20, besonders bevorzugt 0,15 bis 15 beträgt.

Es ist außerdem von Vorteil, wenn das Verhältnis der Wanddicke des Wandflussfiltersubstrates zur Dicke der Beschichtung F 0,8 bis 400 beträgt, insbesondere 2 bis 250.
Der erfindungsgemäße Wandflussfilter kann einen positiven Konzentrationsgradienten der Beschichtung F in Längsrichtung des Filters von seinem ersten zum zweiten Ende aufweisen. Unter "positivem Gradienten" wird erfindungsgemäß die Tatsache verstanden, dass sich der Gradient der Konzentration der Beschichtung F im Filter in axialer Richtung von ersten zum zweiten Ende vergrößert, wobei bevorzugt die Konzentration der Beschichtung F im letzten Fünftel des Substrates (d.h. an das zweite Ende angrenzend) zur Konzentration der Beschichtung F im ersten Fünftel des Substrates (d.h. an das erste Ende angrenzend) ein Verhältnis von 1 bis 5, besonders bevorzugt im Bereich von 1.01 bis 2 liegt.

Der erfindungsgemäße Wandflussfilter kann aber auch einen negativen Konzentrationsgradienten der Beschichtung F in Längsrichtung des Filters von seinem ersten zum zweiten Ende aufweisen. Unter "negativem Gradienten" wird erfindungsgemäß die Tatsache verstanden, dass sich der die Konzentration der Beschichtung F im Filter in axialer Richtung vom ersten zum zweiten Ende verringert, wobei bevorzugt die Konzentration der Beschichtung F im letzten Fünftel des Substrates (d.h. an das zweite Ende angrenzend) zur Konzentration der Beschichtung F im ersten Fünftel des Substrates (d.h. an das erste Ende angrenzend) ein Verhältnis von 0,2 bis 1, besonders bevorzugt im Bereich von 0,5 bis 0,99 liegt.

Im Falle einer bestimmungsgemäßen Verwendung des Wandflussfilters, bei der das Abgas an seinem ersten Ende ein- und am zweiten Ende ausfließt, befindet sich bevorzugt eine größere Menge Beschichtung F in der Nähe des zweiten Endes des Wandflussfiltersubstrates und eine deutlich geringere Menge Beschichtung F in der Nähe des ersten Endes des Wandflussfiltersubstrates.
Simulationen des Gasflusses in einem Wandflussfilter haben gezeigt, dass für die Filtrationseigenschaft des Gesamtfilters hauptsächlich (zu mehr als 50 %) das letzte Drittel des Substrats verantwortlich ist. Durch eine verstärkte Aufbringung von Beschichtung F im letzten Drittel des Filters wird der Staudruck dort verstärkt erhöht, was auf die geringere Permeabilität zurückzuführen ist, und die Durchströmung verschiebt sich mehr in die ersten zwei Drittel des Filters. Daher sollte der Filter einen stärker steigenden Gradienten der Beschichtung F vom ersten zum zweiten Ende hin aufweisen, um seine Filtrationswirkung zu erhöhen. Für das Einstellen eines vorteilhaften Abgasgegendrucks gilt dies mutatis mutandis. Hier sollte demgemäß ggf. ein weniger stark zunehmender Gradient der Konzentration von Beschichtung F gewählt werden.

Wie bereits oben beschrieben befindet sich die Beschichtung F hauptsächlich auf den Oberflächen O_{E} des Wandflussfiltersubstrates. Daraus folgt, dass die Partikelgröße der Oxide, die Beschichtung F, d.h. die Membran bilden, an die Porengröße des Wandflussfiltersubstrates angepasst sein muss. Die Oxidpartikel weisen somit insbesondere eine definierte Partikelgrößenverteilung auf. Bevorzugt weisen die Oxidpartikel eine monomodale, oder eine multimodale oder breite q3-Partikelgrößenverteilung auf.

Für die Definition der Partikelgrößen- bzw. Korngrößenverteilung der Oxidpartikel unterscheidet man in Abhängigkeit von der Methode, mit der die Menge der Partikel bestimmt wird, u.a. zwischen anzahlbezogenen (q0) und volumenbezogenen (q3) Korngrößenverteilungen (M. Stieß, Mechanische Verfahrenstechnik - Partikeltechnologie 1, Springer, 3. Auflage 2009, Seite 29).

Insbesondere beträgt das Verhältnis des d₅₀ Werts der Partikelgrößenverteilung der Beschichtung F, d.h. die Membran bildenden Oxidpartikel und dem d₅ Wert der Porengrößenverteilung des Wandflussfiltersubstrats zwischen 0,4 und 1,3.

Abhängig von der Porengrößenverteilung des Wandflusssubstrates kann der d₉₀ Wert der Partikelgrößenverteilung der die Membran bildenden Oxidpartikel größer oder gleich dem d₉₅ Wert der Porengrößenverteilung des Wandflusssubstrats sein oder kleiner als der d₉₅ Wert der Porengrößenverteilung des Wandflusssubstrats sein.

Soweit sich ein Teil der Beschichtung F in den porösen Wänden des Wandflussfiltersubstrates befindet, muss die Partikelgröße dieses Teils der Beschichtung F ebenfalls an die Porengröße des Wandflussfiltersubstrates angepasst sein. Die Beschichtung F, d.h. die Membran bildenden Oxidpartikel weisen somit auch in diesem Fall eine definierte Partikelgrößenverteilung auf, wobei eine monomodale, oder eine multimodale oder breite q3-Partikelgrößenverteilung bevorzugt ist.
Insbesondere beträgt in diesem Fall das Verhältnis des d₅₀ Werts der Partikelgrößenverteilung der die Beschichtung F, d.h. die Membran bildenden Oxidpartikel zu dem d₅ Wert der Porengrößenverteilung des Wandflussfiltersubstrats von 0,1 bis 0,6. Weiterhin ist insbesondere der d₉₀ Wert der Partikelgrößenverteilung der die Beschichtung F, d.h. die Membran bildenden Oxidpartikel kleiner als der d₉₅ Wert der Porengrößenverteilung des Wandflusssubstrats.

In einer erfindungsgemäßen Ausführungsform weisen die die Beschichtung F, d.h. die Membran bildenden Oxidpartikel einen d₅₀ Wert von 1 µm bis 15 µm auf, insbesondere von 2 µm bis 11 µm.

Weiterhin liegt der d₉₀ Wert der die Membran bildenden Oxidpartikelbei 2 bis 100 µm, bevorzugt bei 2 bis 75 µm und besonders bevorzugt bei 3 bis 50 µm.

Die Membran kann zum einen große Partikel mit einem d₅₀ von 1 bis 15 µm, insbesondere von 2 bis 11 µm, und zusätzlich noch weitere kleine Partikel im sub-micron Maßstab enthalten. Demnach können in der Beschichtung F neben den großen Partikeln zusätzlich Oxidpartikel mit durchschnittlichen Partikelgrößen von 10 bis 1000 nm F enthalten sein.
Das Massenverhältnis der großen Partikel zu den kleinen Partikeln beträgt insbesondere 50 bis 1, bevorzugt, 35 bis 1,5, besonders bevorzugt 25 bis 2.

Die Beschichtung F weist insbesondere eine durchschnittliche Schichtdicke von 1 bis 150 µm auf, bevorzugt 2 bis 100 µm. Unter der durchschnittlichen Schichtdicke ist der Mittelwert der Schichtdicken zu verstehen, die für mindestens fünf verschiedene axial gebildete Segmente separat bestimmt werden. Methoden zur Bestimmung der Schichtdicke sind dem Fachmann hinlänglich bekannt. Diese kann unter anderem mit Hilfe eines Lichtmikroskops oder eines Elektronenmikroskops bestimmt werden. Erfindungsgemäß wird die Schichtdicke auf den Stegen der quadratischen Kanäle und nicht in den Ecken bestimmt.

Sofern ein Teil der Beschichtung F in die poröse Filterwand eindringt, so ist die Eindringtiefe limitiert und beträgt maximal 50 % der Wanddicke, bevorzugt maximal 40 % und ganz besonders bevorzugt maximal 25 %.
Enthält die Beschichtung F Partikel mit einem D50 ≤ 3 µm kann die Eindringtiefe größer sein und beträgt maximal 100 % der Wanddicke, bevorzugt maximal 60 % und ganz besonders bevorzugt maximal 35 %.

In Ausführungsformen der vorliegenden Erfindung kann sich insbesondere herstellungsbedingt ein Teil der Beschichtung F auch in der porösen Filterwand befinden. Insbesondere können sich 1 bis 50 % der gesamten Masse der Beschichtung F in der porösen Filterwand befinden, bevorzugt 1,5 bis 40 % und ganz besonders bevorzugt 2 bis 25%.
Die Beschichtung F bildet auf der Oberfläche O_{E} in der Regel eine zusammenhängende, kontinuierliche Schicht.

Die Beschichtung F kann sich über die gesamte Länge L des Wandflussfiltersubstrates oder nur über einen Teil davon erstrecken. Beispielsweise erstreckt sich Beschichtung F über 10 bis 100, 25 bis 80 oder 40 bis 60 % der Länge L

Insbesondere herstellungsbedingt kann sich ein Teil der Beschichtung F in sogenannten Endaggregatschichten in Bereichen vor den Stopfen am Ende der Kanäle E ansammeln. Diese Endaggregatschichten erstrecken sich typischerweise über eine Länge von 0.01 bis 10 mm, bevorzugt über 0.001 bis 5 mm.

Herstellungsbedingt können sich die Kanäle E beim Beschichten mit der Beschichtung F derartig verengen, dass sie keine perfekte quadratische Form mehr aufweisen, sondern nach der Beschichtung eine rundliche Morphologie aufweisen. Demzufolge ist die Schichtdicke in den Ecken der Kanäle E größer als die Schichtdicke auf den Wänden der Kanäle E, wobei das Schichtdickenverhältnis der Dicken in den Ecken der Kanäle E zu den Dicken auf den Wänden der Kanäle E 1,05 oder mehr und 2,9 oder weniger beträgt.

In einer Ausführungsform des erfindungsgemäßen Wandflussfilters weist das Wandflussfiltersubstrat eine Beschichtung Y auf, die von den Beschichtungen Z und F verschieden ist, die Platin, Palladium oder Platin und Palladium umfasst, die kein Rhodium und kein Cer/Zirkonium-Mischoxid enthält und die sich in den porösen Wänden und/ oder auf den Oberflächen O_{E}, nicht aber auf den Oberflächen O_{A} befindet. Bevorzugt enthält Beschichtung Y Platin und Palladium mit einem Massenverhältnis Platin zu Palladium von 25:1 bis 1:25, besonders bevorzugt 15:1 bis 1:2.

In der Beschichtung Y liegen Platin, Palladium bzw. Platin und Palladium üblicherweise auf einem oder mehreren Trägermaterialien fixiert vor.
Als Trägermaterialien kommen alle dem Fachmann für diesen Zweck geläufigen Materialien in Betracht. Solche Materialien sind insbesondere Metalloxide mit einer BET-Oberfläche von 30 bis 250 m²/g, bevorzugt von 100 bis 200 m²/g (bestimmt nach DIN 66132 - neueste Fassung am Anmeldetag). Besonders geeignete Trägermaterialien sind ausgewählt aus der Reihe bestehend aus Aluminiumoxid, dotiertes Aluminiumoxid, Siliziumoxid, Titandioxid und Mischoxiden aus einem oder mehreren davon. Dotierte Aluminiumoxide sind beispielsweise Lanthanoxid-, Zirkoniumoxid- Bariumoxid- und/oder Titanoxid-dotierte Aluminiumoxide. Mit Vorteil wird Aluminiumoxid oder Lanthan-stabilisiertes Aluminiumoxid eingesetzt, wobei im letztgenannten Fall Lanthan in Mengen von 1 bis 10 Gew.-%, bevorzugt 3 bis 6 Gew.-%, jeweils berechnet als La₂O₃ und bezogen auf das Gewicht des stabilisierten Aluminiumoxides, verwendet wird.

Auch im Fall von mit Bariumoxid dotiertem Aluminiumoxid ist der Anteil an Bariumoxid insbesondere 1 bis 10 Gew.-%, bevorzugt 3 bis 6 Gew.-%, jeweils berechnet als BaO und bezogen auf das Gewicht des stabilisierten Aluminiumoxides.
Ein weiteres geeignetes Trägermaterial ist Lanthan-stabilisiertes Aluminiumoxid, dessen Oberfläche mit Lanthanoxid, mit Bariumoxid und/oder mit Strontiumoxid beschichtet ist.
Beschichtung Y umfasst bevorzugt mindestens ein Aluminiumoxid oder dotiertes Aluminiumoxid.

Die Beschichtung Y befindet sich in einer Ausführungsform ausschließlich auf den Oberflächen O_{E} des Wandflussfiltersubstrates und erstreckt sich ausgehend von dessen ersten Ende auf einer Länge von 50 bis 90 % der Länge L.

Die Beschichtung Y befindet sich in einer anderen Ausführungsform in den porösen Wänden des Wandflussfiltersubstrates und erstreckt sich ausgehend von dessen ersten Ende bevorzugt auf einer Länge von 50 bis 100 % der Länge L.

Sofern Beschichtung Y vorhanden ist, so beträgt das Massenverhältnis von Beschichtung Y zu Beschichtung Z bevorzugt 0,05 bis 8,5.

Beispielsweise weist das Trägermaterial von Beschichtung Y ein größeres Porenvolumen auf als das Trägermaterial von Beschichtung Z. Das Verhältnis der spezifischen Oberflächen der Trägeroxide von Beschichtung Y zu Beschichtung Z beträgt bevorzugt 0,5 bis 2, insbesondere 0,7 bis 1,5.

Beispielsweise beträgt das Verhältnis des Porenvolumens der Oxide von Beschichtung F zu dem Porenvolumen des Trägermaterials von Beschichtung Z 0,01 bis 3, insbesondere 0,05 bis 2,5. Das Verhältnis der spezifischen Oberflächen der Oxide von Beschichtung F zu der spezifischen Oberfläche der Trägeroxide von Beschichtung Z beträgt beispielsweise0,1 bis 4, insbesondere 0,25 bis 3.

In einer erfindungsgemäßen Ausführungsform ist die Schüttdichte von Komponente A von Beschichtung F größer der Schüttdichte des Aluminiumoxids von Beschichtung Z. In einer erfindungsgemäßen Ausführungsform ist die Schüttdichte von Komponente A von Beschichtung F größer der Schüttdichte des Aluminiumoxids von Beschichtung Y. In einer erfindungsgemäßen Ausführungsform ist die Stampfdichte von Komponente A von Beschichtung F größer der Stampfdichte des Aluminiumoxids von Beschichtung Z. In einer erfindungsgemäßen Ausführungsform ist die Stampfdichte von Komponente A von Beschichtung F größer der Stampfdichte des Aluminiumoxids von Beschichtung Y.

Bei einem besonders bevorzugten Wandflussfilter gemäß vorliegender Erfindung befindet sich die Beschichtung Z in den porösen Wänden und/oder auf den Oberflächen O_{A}, nicht aber auf den Oberflächen O_{E}, erstreckt sich vom zweiten Ende aus über 60 bis 100% Prozent der Länge L und umfasst Lanthan-stabilisiertes Aluminiumoxid, Rhodium, Palladium oder Palladium und Rhodium, sowie ein Cer/Zirkonium/Seltenerdmetall-Mischoxid, das Yttriumoxid oder Neodymoxid oder Praseodymoxid und Lanthanoxid als Seltenerdmetalloxide enthält und
befindet sich die Beschichtung F hauptsächlich auf den Oberflächen O_{E}, nicht aber auf den Oberflächen O_{A}, umfasst eine Membran und kein Edelmetall, weist eine Schichtdicke von 1 bis 150 µm auf und erstreckt sich vom ersten Ende aus über eine Länge von 80 bis 100% der Länge L, wobei das Massenverhältnis von Beschichtung Z zu Beschichtung F 0,15 bis 15 beträgt.

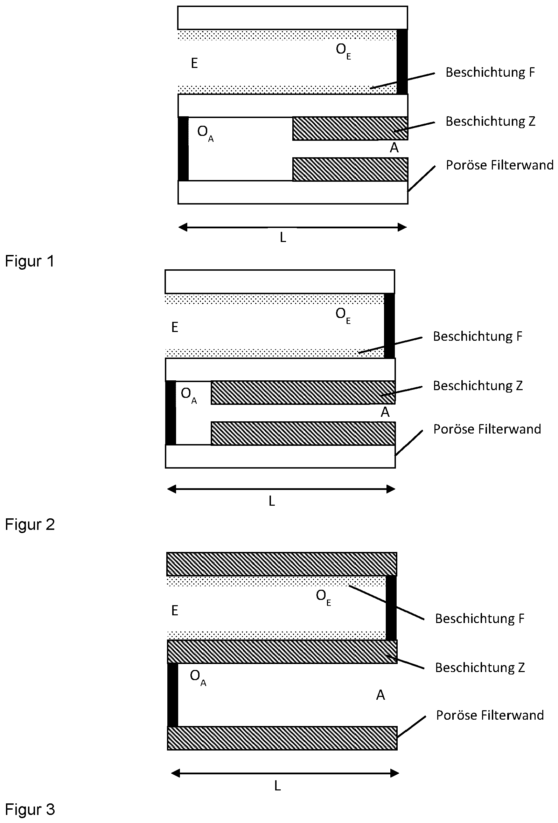

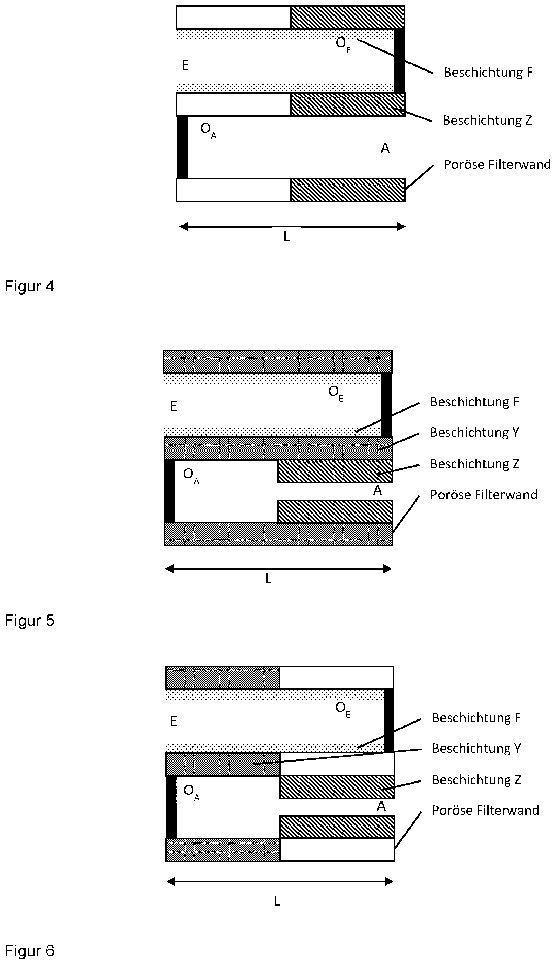

Die Beschichtungen Z, F und falls vorhanden Y können auf dem Wandflussfiltersubstrat in verschiedener Weise angeordnet sein. Die Figuren 1 bis 10 erläutern dies beispielhaft, wobei die Figuren 1 bis 4 erfindungsgemäße Wandflussfilter betreffen, die nur die Beschichtungen Z und F umfassen, während die erfindungsgemäßen Wandflussfilter gemäß der Figuren 5 bis 10 zusätzlich die Beschichtung Y umfassen.

Figur 1 betrifft einen erfindungsgemäßen Wandflussfilter, bei dem sich die Beschichtung Z in den Kanälen A auf den Oberflächen O_{A} befindet und sich ausgehend vom zweiten Ende des Wandflussfiltersubstrates auf 50% der Länge L erstreckt. Die Beschichtung F befindet sich in den Kanälen E und erstreckt sich über die gesamte Länge L.

Auch Figur 2 betrifft einen erfindungsgemäßen Wandflussfilter, bei dem sich die Beschichtung Z in den Kanälen A auf den Oberflächen O_{A} befindet. Ausgehend vom zweiten Ende des Wandflussfiltersubstrates erstreckt sie sich aber auf 80% der Länge L. Die Beschichtung F befindet sich in den Kanälen E und erstreckt sich über die gesamte Länge L.

Figur 3 betrifft einen erfindungsgemäßen Wandflussfilter, bei dem sich die Beschichtung Z in den porösen Wänden befindet und über die gesamte Länge L erstreckt. Die Beschichtung F befindet sich in den Kanälen E und erstreckt sich ebenfalls über die gesamte Länge L.

Figur 4 betrifft einen erfindungsgemäßen Wandflussfilter, bei dem sich die Beschichtung Z in den porösen Wänden befindet und sich ausgehend vom zweiten Ende des Wandflussfiltersubstrates auf 50% der Länge L erstreckt. Die Beschichtung F befindet sich in den Kanälen E und erstreckt sich über die gesamte Länge L.

Figur 5 betrifft einen erfindungsgemäßen Wandflussfilter, der sich von dem der Figur 4 dadurch unterscheidet, dass sich Beschichtung Z über 50 % der Länge L auf den Oberflächen O_{A} und sich zusätzlich Beschichtung Y in den porösen Wänden über die gesamte Länge L befindet. Die Beschichtung F befindet sich in den Kanälen E und erstreckt sich über die gesamte Länge L.

Figur 6 betrifft einen erfindungsgemäßen Wandflussfilter, der sich von dem der Figur 4 dadurch unterscheidet, dass sich Beschichtung Z über 50 % der Länge L auf den Oberflächen O_{A} und sich zusätzlich Beschichtung Y in den porösen Wänden und zwar ausgehend vom ersten Ende des Wandflussfiltersubstrates auf 50% der Länge L erstreckt. Die Beschichtung F befindet sich in den Kanälen E und erstreckt sich über die gesamte Länge L.

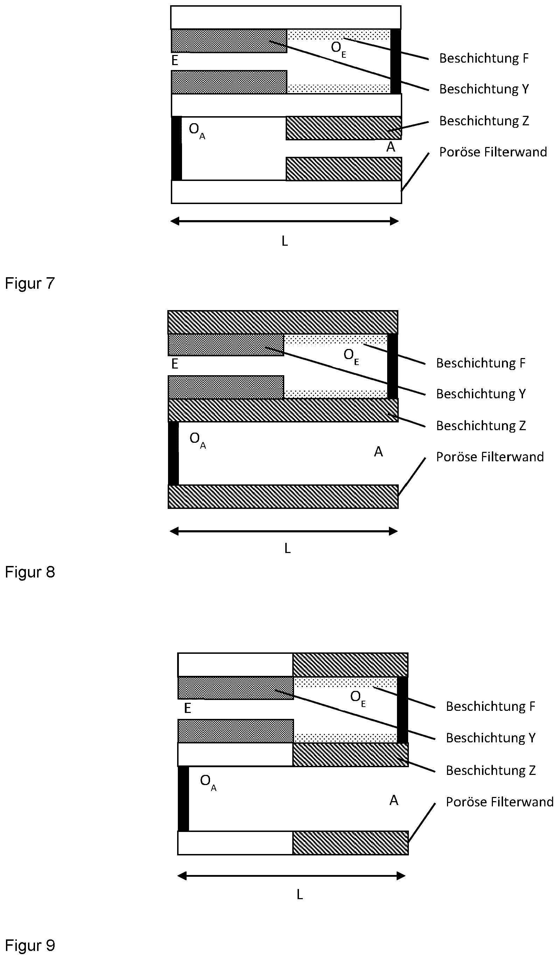

Figur 7 betrifft einen erfindungsgemäßen Wandflussfilter, bei dem sich die Beschichtung Z in den Kanälen A auf den Oberflächen O_{A} befindet und sich über 50% der Länge L erstreckt. Außerdem befindet sich Beschichtung Y in den Kanälen E auf den Oberflächen O_{E} und erstreckt sich ausgehend vom ersten Ende des Wandflussfiltersubstrates auf 50 % der Länge L. Die Beschichtung F befindet sich den Kanälen E und erstreckt sich ausgehend vom zweiten Endes des Wandflussfiltersubstrates über 50% der Länge L.

Figur 8 betrifft einen erfindungsgemäßen Wandflussfilter, bei dem sich die Beschichtung Z in den porösen Wänden befindet und sich über die gesamte Länge L erstreckt. Außerdem befindet sich Beschichtung Y in den Kanälen E auf den Oberflächen O_{E} und erstreckt sich ausgehend vom ersten Ende des Wandflussfiltersubstrates auf 50 % der Länge L. Die Beschichtung F befindet sich den Kanälen E und erstreckt sich ausgehend vom zweiten Endes des Wandflussfiltersubstrates über 50% der Länge L.

Figur 9 betrifft einen erfindungsgemäßen Wandflussfilter, bei dem sich die Beschichtung Z in den porösen Wänden befindet und sich ausgehend vom zweiten Ende des Wandflussfiltersubstrates auf 50% der Länge L erstreckt. Außerdem befindet sich Beschichtung Y in den Kanälen E auf den Oberflächen O_{E} und erstreckt sich ausgehend vom ersten Ende des Wandflussfiltersubstrates auf 50 % der Länge L. Die Beschichtung F befindet sich den Kanälen E und erstreckt sich ausgehend vom zweiten Endes des Wandflussfiltersubstrates über 50% der Länge L.

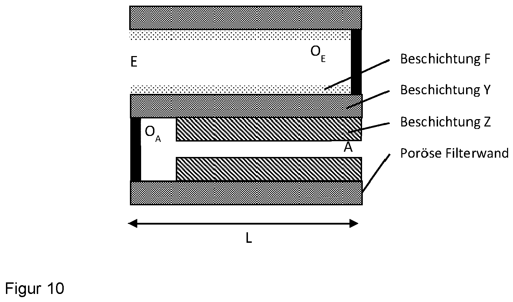

Figur 10 betrifft einen erfindungsgemäßen Wandflussfilter, bei dem sich die Beschichtung Z in den Kanälen A auf den Oberflächen O_{A} befindet und sich ausgehend vom zweiten Endes des Wandflussfiltersubstrates auf 80% der Länge L erstreckt. Außerdem befindet sich Beschichtung Y in den porösen Wänden und erstreckt sich über die gesamte Länge L. Die Beschichtung F befindet sich den Kanälen E und erstreckt sich über die gesamte Länge L.

Das erfindungsgemäße Wandflussfilter kann dadurch hergestellt werden, dass die Beschichtungen Z, F und sofern vorhanden Y auf ein Wandflussfiltersubstrat aufgebracht werden.
Dabei wird die katalytische Aktivität nach Maßgabe des Fachmanns durch die Beschichtung des Wandflussfiltersubstrates mit der Beschichtung Z und sofern vorhanden mit der Beschichtung Y bereitgestellt.

Unter dem Begriff des Beschichtens wird demgemäß das Aufbringen von katalytisch aktiven Materialien auf ein Wandflussfiltersubstrat verstanden. Die Beschichtung übernimmt die eigentliche katalytische Funktion. Vorliegend erfolgt die Beschichtung durch das Aufbringen einer entsprechend wenig viskosen wässrigen Suspension der katalytisch aktiven Komponenten - auch Washcoat genannt - in oder auf die Wand des Wandflussfiltersubstrates, zum Beispiel gemäß EP1789190B1. Nach dem Aufbringen der Suspension wird das Wandflussfiltersubstrat jeweils getrocknet und gegebenenfalls bei erhöhter Temperatur kalziniert. Der katalytisch beschichtete Filter besitzt vorzugsweise eine Beladung von 20 g/l bis 200 g/l, vorzugsweise 30 g/l bis 150 g/l (Beschichtung Z bzw. Summe der Beschichtungen Z und Y). Die geeignetste Beladungsmenge eines in der Wand beschichteten Filters hängt von seiner Zelldichte, seiner Wandstärke und der Porosität ab.
Die Beschichtung F kann ebenfalls durch das oben beschriebene Beschichtungsverfahren, d.h. mittels eines nasschemischen Beschichtungsschrittes, auf die Oberflächen O_{E} aufgebracht werden.
So kann zunächst die Beschichtung F auf die Oberflächen O_{E} beschichtet und anschließend, nach kalzinieren, die Beschichtungen Y, falls vorhanden, und Z aufgebracht werden.
Alternativ können zunächst die Beschichtungen Y, falls vorhanden, und Z aufgebracht und anschließend die Beschichtung F auf die Oberflächen O_{E} beschichtet werden.

In der Regel werden die zum Beschichten notwendigen Suspensionen durch Mischen der Bestandteile und anschließendes Mahlen mit Hilfe einer entsprechenden Mühle auf die gewünschte Korngröße und Einstellung der Viskosität erhalten. Soll Beschichtung F sub-micron Partikel enthalten, erfolgt deren Zugabe insbesondere nach dem mahlschritt und vor Einstellung der Viskosität.
Für die Beschichtung der Beschichtung F wird in der Regel die Suspension zunächst in den Kanal E mit einer Einpumpgeschwindigkeit von 25 bis 500 ml/s eingepumpt. Anschließend wird die Suspension entgegen der Einpumprichtung mit einem ersten Absaugstoß abgesaugt und danach, nach umdrehen, mit einem zweiten Absaugimpuls in Einpumprichtung erneut abgesaugt.
Erfindungsgemäß ist hierbei der Unterdruck des zweiten Absaugimpuls, gemessen in mbar, größer oder gleich dem Unterdruck des ersten Absaugimpuls, wobei das Verhältnis der Drücke des ersten zum zweiten Absaugimpuls 0,1 bis 1 beträgt, bevorzugt 0,15 bis 0,8 und besonders bevorzugt0,2 bis 0,75.
Der erste Absaugimpuls erstreckt sich insbesondere über einen Zeitraum von 0.5 bis 15 Sekunden. Auch der zweite Absaugimpuls erstreckt sich über einen Zeitraum von 0.5 bis 15 Sekunden. Dabei kann der erste Absaugimpuls länger als der zweite Absaugimpuls sein oder der zweite Absaugimpuls kann länger als der erste Absaugimpuls sein.

Nach vollständiger Füllung der Kanäle E und vor Anlegen des ersten Absaugimpulses kann eine Haltezeit von 0 bis 200 Sekunden angelegt werden, während die Beschichtungssuspension in den Kanälen E verbleibt.

Die Suspension zur Herstellung der Beschichtung F weist eine bestimmte Viskosität auf, die mit einer Vielzahl an handelsüblichen Additiven beeinflusst werden. Diese sind dem Fachmann hinlänglich bekannt.
Die Viskosität der Suspension zur Herstellung der Beschichtung F wird bevorzugt in einen Bereich von 0,01 bis 10 Pa s⁻¹, bevorzugt von 0.02 bis 7,5 Pa s⁻¹ und besonders bevorzugt in einen Bereich von 0,03 bis 5 Pa s⁻¹ eingestellt, gemessen bei einer Scherrate von 1000 s⁻¹ und einer Temperatur von 23°C.
Die Masse der Beschichtung F beträgt insbesondere 3 bis 75 g/L, bezogen auf das Volumen des Wandflusssubstrats, bevorzugt 5 bis 60 g/L.
Die aufgebrachte Masse der Beschichtung F kann in Abhängigkeit des verwendeten Wandflussfiltersubstrats variiert werden. So ist es vorteilhaft, wenn das Verhältnis der Masse der Beschichtung F zu dem mittleren Porendurchmesser des Wandflussfiltersubstrats, gemessen in µm, 0,25 bis 8, bevorzugt 0,5 bis 6 beträgt.

Die erfindungsgemäßen katalytisch beschichteten Wandflussfilter unterscheiden sich von denen, die im Abgasstrang eines Fahrzeugs durch Ascheablagerung während des Betriebs entstehen. Erfindungsgemäß werden die katalytisch aktiven Wandflussfiltersubstrate gezielt mit Beschichtung F versehen. Dies führt dazu, dass die Balance zwischen Filtrationseffizienz und Abgasgegendruck von Anfang an gezielt eingestellt werden kann. Nicht mitumfasst von der vorliegenden Erfindung sind daher Wandflussfilter, bei denen undefinierte Ascheablagerungen aus der Verbrennung von Kraftstoff z.B. im Zylinder während des Fahrbetriebs oder mittels eines Brenners erfolgt sind. Nicht mitumfasst von der vorliegenden Erfindung sind daher auch Wandflussfilter, bei denen definierte Ascheablagerungen durch Trockenbeschichtung eines Luft/Pulveraerosols erfolgt sind.
Im Gegensatz zu diesen, weisen die erfindungsgemäßen katalytisch beschichteten Wandflussfilter zudem eine hohe Stabilität gegenüber Kondenswasser auf, welches sich üblicherweise in Mengen von 10 bis 1000 ml im Abgasstrang sammelt. Anders als die durch Trockenbeschichtung eines Luft/Pulveraerosols erhaltenden Filtrationsbeschichtungen weist die Beschichtung F nach Kontakt mit mehr als 50 ml Wasser lediglich einen Verlust der Filtrationsleistung von 0 bis 5 % auf.

Der erfindungsgemäße Wandflussfilter zeigt eine hervorragende Filtrationseffizienz bei nur moderatem Anstieg des Abgasgegendrucks verglichen mit einem Wandflussfilter ohne die Beschichtung F im frischen Zustand. Bevorzugt zeigt der erfindungsgemäße Wandflussfilter eine Verbesserung der Rußpartikelabscheidung (Filterwirkung) im Filter von mindestens 5 %, vorzugsweise mindestens 10 % und ganz besonders bevorzugt mindestens 20 % bei einer relativen Erhöhung des Abgasgegendrucks des frischen Wandflussfilters von höchstens 40%, vorzugsweise von höchsten 20% und ganz besonders bevorzugt höchstens 10% verglichen mit einem nicht mit Beschichtung F behandelten, frischen, mit katalytisch aktivem Material beschichteten Filter. Die geringe Staudruckerhöhung ist wahrscheinlich darauf zurückzuführen, dass durch die erfindungsgemäße Beaufschlagung des Filters mit Beschichtung F der Querschnitt der Kanäle auf der Eingangsseite nicht stark verringert wird. Es wird angenommen, dass Beschichtung F eine poröse Struktur bildet, was sich positiv auf den Staudruck auswirkt. Durch die Beschichtung F weist ein erfindungsgemäßer Filter zudem einen niedrigeren Staudruck nach Rußbeladung auf, als ein analoger Filter ohne Beschichtung F, da diese das Eindringen des Rußes in die poröse Filterwand weitgehend verhindert. Beschichtung Z verleiht dem erfindungsgemäßen Wandflussfilter eine hervorragende Dreiwege-Aktivität, während die optionale Beschichtung Y die Rußzündtemperatur herabzusetzen vermag und somit den Rußabbrand erleichtert.

Ebenfalls Gegenstand der vorliegenden Erfindung ist somit die Verwendung eines erfindungsgemäßen Wandflussfilters zur Minderung schädlicher Abgase eines Verbrennungsmotors. Bevorzugt ist die Verwendung des erfindungsgemäßen Wandflussfilters zur Behandlung von Abgasen eines stöchiometrisch betriebenen Verbrennungsmotors, also insbesondere eines mit Benzin betriebenen Verbrennungsmotors.

Ganz vorteilhaft wird der erfindungsgemäße Wandflussfilter in Kombination mit einem Dreiwegkatalysator, der sich insbesondere an das zweite Ende des Wandflussfilters anschließt (d.h. beim bestimmungsgemäßen Gebrauch abströmseitig angeordnet ist), eingesetzt.

Die für den erfindungsgemäßen Wandflussfilter beschriebenen bevorzugten Ausführungsformen gelten mutatis mutandis auch für die hier erwähnte Verwendung.

Die vorliegende Erfindung betrifft des Weiteren ein Abgasreinigungssystem, das einen erfindungsgemäßen Filter und mindestens einen weiteren Katalysator umfasst. In einer Ausführungsform dieses Systems ist mindestens ein weiterer Katalysator stromaufwärts des erfindungsgemäßen Filters angeordnet. Bevorzugt handelt es sich hierbei um einen Dreiwegekatalysator oder einen Oxidationskatalysator oder einen NOₓ-Speicherkatalysator. In einer weiteren Ausführungsform dieses Systems ist mindestens ein weiterer Katalysator stromabwärts des erfindungsgemäßen Filters angeordnet. Bevorzugt handelt es sich hierbei um einen Dreiwegekatalysator oder einen SCR Katalysator oder einen NOₓ-Speicherkatalysator oder um einen Ammoniakschlupfkatalysator. In einer weiteren Ausführungsform dieses Systems ist mindestens ein weiterer Katalysator stromaufwärts des erfindungsgemäßen Filters und mindestens ein weiterer Katalysator stromabwärts des erfindungsgemäßen Filters angeordnet. Bevorzugt handelt es sich bei den stromaufwärts angeordneten Katalysator um einen Dreiwegekatalysator oder einen Oxidationskatalysator oder einen NOₓ-Speicherkatalysator und bei dem stromabwärts angeordneten Katalysator um einen Dreiwegekatalysator oder einen SCR Katalysator oder einen NOₓ-Speicherkatalysator oder um einen Ammoniakschlupfkatalysator. Die für den erfindungsgemäßen Wandflussfilter beschriebenen bevorzugten Ausführungsformen gelten mutatis mutandis auch für das hier erwähnte Abgasreinigungssystem.

Üblicherweise findet der erfindungsgemäße Filter vor allem bei Verbrennungsmotoren, insbesondere bei Verbrennungsmotoren mit Direkteinspritzung oder Saugrohreinspritzung Anwendung. Bevorzugt handelt es sich hierbei um stöchiometrisch betriebene Benzin- oder Erdgasmotoren. Bevorzugt handelt es sich um Motoren mit Turboaufladung

Die Anforderungen an Benzinpartikelfilter (GPF) unterscheiden sich deutlich von den Anforderungen an Dieselpartikelfilter (DPF). Dieselmotoren ohne DPF können bis zu zehnfach höhere Partikelemissionen, bezogen auf die Partikelmasse, aufweisen als Benzinmotoren ohne GPF (Maricq et al., SAE 1999-01-01530). Außerdem fallen beim Benzinmotor deutlich weniger Primärpartikel an und die Sekundärpartikel (Agglomerate) sind deutlich kleiner als beim Dieselmotor. Die Emissionen bei Benzinmotoren liegen im Bereich von Partikelgrößen kleiner 200 nm (Hall et al., SAE 1999-01-3530) bis 400 nm (Mathis et al., Atmospheric Environment 38 4347) mit dem Maximum im Bereich von rund 60 nm bis 80 nm. Daher muss die Filtration der Nanopartikel beim GPF hauptsächlich über Diffusionsabscheidung erfolgen. Für Partikel kleiner als 300 nm wird mit abnehmender Größe die Abscheidung durch Diffusion (Brownsche Molekularbewegung) und elektrostatische Kräfte immer bedeutender (Hinds, W.: Aerosol technology: Properties and behavior and measurement of airborne particles. Wiley, 2. Auflage 1999).

Die Figuren 1 bis 10 zeigen die bereits oben genauer beschriebenen unterschiedlichen Beschichtungsanordnungen erfindungsgemäßer Wandflussfilter. Darin bezeichnet
(E) den Eingangskanal/ Anströmkanal des Wandflussfilters
(A) den Ausgangskanal/ Abströmkanal des Wandflussfilters
(O_{E}) die von den Eingangskanälen (E) gebildeten Oberflächen
(O_{A}) die von den Ausgangskanälen (A) gebildeten Oberflächen
(L) die Länge der Filterwand
(Z) die Beschichtung Z
(Y) die Beschichtung Y
(F) die Beschichtung F

Die Vorzüge der Erfindung werden im Folgenden durch Beispiele erläutert.

### Vergleichsbeispiel 1: Nur Beschichtung Z

Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicher-komponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 25 g/l, die Gesamtedelmetallbeladung 0,166 g/l wobei ausschließlich Palladium als Edelmetallspezies verwendet wurde. Der so erhaltene beschichtete Filter wurde getrocknet und anschließend kalziniert. Er wird nachstehend als VGPF1 bezeichnet.

Erfindungsgemäßes Beispiel 1: Beschichtung Z in Kombination mit Beschichtung F: Mit Lanthanoxid stabilisiertes Aluminiumoxid wurde zusammen mit einer ersten Sauerstoffspeicherkomponente, die 40 Gew.-% Ceroxid, Zirkonoxid, Lanthanoxid und Praseodymoxid umfasste, und einer zweiten Sauerstoffspeicher-komponente, die 24 Gew.-% Ceroxid, Zirkonoxid, Lanthanoxid und Yttriumoxid umfasste, in Wasser suspendiert. Beide Sauerstoffspeicherkomponenten wurden zu gleichen Teilen eingesetzt. Das Gewichtsverhältnis von Aluminiumoxid und Sauerstoffspeicherkomponente betrug 30:70. Die so erhaltene Suspension wurde anschließend unter ständigem Rühren mit einer Palladiumnitrat-Lösung und einer Rhodiumnitrat-Lösung versetzt. Die resultierende Beschichtungssuspension wurde direkt zur Beschichtung eines handelsüblichen Wandflussfiltersubstrats eingesetzt, wobei die Beschichtung über 100% der Substratlänge in die poröse Filterwand eingebracht wurde. Die Gesamtbeladung dieses Filters betrug 25 g/l, die Gesamtedelmetallbeladung 0,166 g/l wobei ausschließlich Palladium als Edelmetallspezies verwendet wurde.
Der so erhaltene beschichtete Filter wurde getrocknet und anschließend kalziniert. Anschließend wurde der Filter auf den Oberflächen O_{E} mit einer nasschemischen filtrationseffizienzsteigernden Membran bestehend aus Aluminiumoxid beschichtet. Hierzu wurde eine Suspension aus einen Metalloxid mit einer mittleren Korngröße von 5.7 µm in einem nasschemischen Prozess beschichtet. Dabei wurde die Suspension zunächst in das Substrat eingepumpt und anschließend mit einem schwachen Absaugimpuls entgegen der Einpumprichtung entleert. Anschließend wurde der Filter mit einem zweiten, stärkeren Absaugimpuls in Einpumprichtung erneut abgesaugt. Der so erhaltene beschichtete Filter wurde getrocknet und anschließend kalziniert. Die Gesamtbeladung dieses Filters betrug somit 55 g/l, wobei 25 g/L auf Beschichtung Z und 30 g/L auf Beschichtung F entfallen. Er wird nachstehend als GPF1 bezeichnet.

Die beiden so erhaltenen Filter wurden anschließend an einem Kaltblasprüfstand vermessen, um den Druckverlust über den jeweiligen Filter zu bestimmen. Bei Raumtemperatur und einem Volumenstrom von 600 m³/h Luft ergibt sich ein Gegendruck des VGPF1 von 16 mbar und des GPF1 von 50 mbar. Wie bereits beschrieben führt die Filtrationsbeschichtung F lediglich zu einem moderaten Gegendruckanstieg.

Parallel dazu wurden frische Filter VGPF1 und GPF1 im Fahrzeug bezüglich ihrer Partikelfiltrationseffizienz untersucht. Hierzu wurden die Filter in einem RTS-aggressive Fahrzyklus in motornaher Position zwischen zwei Partikelzählern vermessen. Hierbei weist der erfindungsgemäße Filter GPF1 eine, aus den Partikelwerten der beiden Partikelzählern berechnete Filtrationseffizienz von 88,3 % auf, während der Vergleichsfilter VGPF1 lediglich eine Filtrationseffizienz von 68,4 % erzielt. In Summe ist ersichtlich, dass die Kombination aus Filtrationsbeschichtung F und der Dreiwegebeschichtung Z besonders vorteilhaft bezüglich der Filtrationseffizienz ist.

## Patentansprüche

1. Wandflussfilter zur Entfernung von Partikeln aus dem Abgas von Verbrennungsmotoren, das ein Wandflussfiltersubstrat der Länge L und voneinander verschiedene Beschichtungen Z und F umfasst,
wobei das Wandflussfiltersubstrat Kanäle E und A aufweist, die sich parallel zwischen einem ersten und einem zweiten Ende des Wandflussfiltersubstrats erstrecken, durch poröse Wände getrennt sind und Oberflächen O_{E} bzw. O_{A} bilden und wobei die Kanäle E am zweiten Ende und die Kanäle A am ersten Ende verschlossen sind und
wobei sich die Beschichtung Z in den porösen Wänden und/oder auf den Oberflächen O_{A}, nicht aber auf den Oberflächen O_{E} befindet, und Palladium und/oder Rhodium und ein Cer/Zirkonium-Mischoxid umfasst und
wobei sich die Beschichtung F hauptsächlich auf den Oberflächen O_{E}, nicht aber auf den Oberflächen O_{A} befindet und eine Membran und kein Edelmetall umfasst,
**dadurch gekennzeichnet, dass** das Massenverhältnis von Beschichtung Z zu Beschichtung F 0,1 bis 25 beträgt.

2. Wandflussfilter gemäß Anspruch 1, **dadurch gekennzeichnet, dass** sich Beschichtung Z auf den Oberflächen O_{A} des Wandflussfiltersubstrates befindet und sich ausgehend vom zweiten Ende des Wandflussfiltersubstrates auf 50 bis 90 % der Länge L erstreckt oder sich in den porösen Wänden des Wandflussfiltersubstrates befindet und sich ausgehend vom ersten Ende des Wandflussfiltersubstrates auf 50 bis 100 % der Länge L erstreckt

3. Wandflussfilter gemäß Anspruch 1 und/oder 2, **dadurch gekennzeichnet, dass** das Cer/Zirkonium-Mischoxid der Beschichtung Z ein oder mehrerer Seltenerdmetalloxide enthält.

4. Wandflussfilter gemäß einem oder mehreren der Ansprüche 1 bis 3, **dadurch gekennzeichnet, dass** Beschichtung Z Lanthan-stabilisiertes Aluminiumoxid, Rhodium, Palladium oder Palladium und Rhodium, sowie ein Cer/Zirkonium/Seltenerdmetall-Mischoxid, das Yttriumoxid und Lanthanoxid oder Praseodymoxid und Lanthanoxid als Seltenerdmetalloxide enthält, umfasst.

5. Wandflussfilter gemäß einem oder mehreren der Ansprüche 1 bis 4, **dadurch gekennzeichnet, dass** sich 55 bis 100 % der Gesamtmasse der Beschichtung F auf den Oberflächen O_{E} befinden.

6. Wandflussfilter gemäß einem oder mehreren der Ansprüche 1 bis 5, **dadurch gekennzeichnet, dass** Beschichtung F aus einer zusammenhängenden Membran auf den Oberflächen O_{E} besteht.

7. Wandflussfilter gemäß einem oder mehreren der Ansprüche 1 bis 6, **dadurch gekennzeichnet, dass** die Membran der Beschichtung F ein partikelförmiges Oxid eines Elementes ausgewählt aus der Gruppe bestehend aus Silizium, Aluminium, Titan, Zirkonium, Cer, Yttrium, Praeseodym, Strontium, Bismut, Neodym, Lanthan und Barium oder eine Mischung aus zwei oder mehr der genannten Oxide enthält.

8. Wandflussfilter gemäß einem oder mehreren der Ansprüche 1 bis 7, **dadurch gekennzeichnet, dass** die Membran der Beschichtung F
eine Komponente A, die Aluminiumoxid oder Siliziumoxid oder Titanoxid umfasst und einen Anteil von mehr als 50% an der Gesamtmasse der Beschichtung F aufweist, sowie
eine Komponente B die ein Oxid der Elemente Cer, Zirkon, Barium oder Lanthan oder eine Mischung aus zwei oder mehr der genannten Oxide umfasst und einen Anteil von weniger als 50% an der Gesamtmasse der Beschichtung F aufweist.

9. Wandflussfilter gemäß einem oder mehreren der Ansprüche 1 bis 8, **dadurch gekennzeichnet, dass** das Verhältnis der Wanddicke des Wandflussfiltersubstrates zur Dicke der Beschichtung F 0,8 bis 400 beträgt.

10. Wandflussfilter gemäß einem oder mehreren der Ansprüche 1 bis 9, **dadurch gekennzeichnet, dass** die mittlere Porengröße d₅₀ der Membran der Beschichtung F wenigstens 50 nm beträgt, wobei unter dem dso-Wert der Porengrößenverteilung zu verstehen ist, dass 50 % des gesamten, durch Quecksilberporosimetrie bestimmbaren, Porenvolumens gebildet werden durch Poren, deren Durchmesser kleiner oder gleich dem als d₅₀ angegebenen Wert ist.

11. Wandflussfilter gemäß einem oder mehreren der Ansprüche 1 bis 10, **dadurch gekennzeichnet, dass** die mittlere Porengröße d₅₀ der Membran der Beschichtung F kleiner ist als die mittlere Porengröße d₅₀ des Wandflussfiltersubstrates.

12. Wandflussfilter gemäß einem oder mehreren der Ansprüche 1 bis 11, **dadurch gekennzeichnet, dass** die Membran große Partikel mit einem d₅₀ von 1 bis 15 µm und zusätzlich kleine Partikel im sub-micron Maßstab enthält.

13. Wandflussfilter gemäß einem oder mehreren der Ansprüche 1 bis 12, **dadurch gekennzeichnet, dass** das Wandflussfiltersubstrat eine Beschichtung Y aufweist, die von den Beschichtungen Z und F verschieden ist, die Platin, Palladium oder Platin und Palladium umfasst, die kein Rhodium und kein Cer/Zirkonium-Mischoxid enthält und die sich in den porösen Wänden und/oder auf den Oberflächen O_{E}, nicht aber auf den Oberflächen O_{A} befindet.

14. Wandflussfilter gemäß einem oder mehreren der Ansprüche 1 bis 13, **dadurch gekennzeichnet, dass** sich die Beschichtung Z in den porösen Wänden und/oder auf den Oberflächen O_{A}, nicht aber auf den Oberflächen O_{E} befindet, sich vom zweiten Ende aus über 60 bis 100% Prozent der Substratlänge L erstreckt und Lanthan-stabilisiertes Aluminiumoxid, Rhodium, Palladium oder Palladium und Rhodium, sowie ein Cer/Zirkonium/Seltenerdmetall-Mischoxid, das Yttriumoxid oder Neodymoxid oder Praseodymoxid und Lanthanoxid als Seltenerdmetalloxide enthält, umfasst,
sich die Beschichtung F hauptsächlich auf den Oberflächen O_{E}, nicht aber auf den Oberflächen O_{A} befindet, eine Membran und kein Edelmetall umfasst, eine Schichtdicke von 1 bis 150 µm aufweist und sich vom ersten Ende aus über eine Länge von 80 bis 100% der Substratlänge L erstreckt,
wobei das Massenverhältnis von Beschichtung Z zu Beschichtung F 0,15 bis 15 beträgt.

15. Verfahren zur Herstellung eines Wandflussfilters gemäß einem oder mehreren der Ansprüche 1 bis 14, **dadurch gekennzeichnet, dass** die Kanäle E des bereits mit Beschichtung Z und gegebenenfalls Beschichtung Y beschichteten trockenen Wandflussfiltersubstrats mit der Beschichtung F beschichtet werden, in dem eine die Bestandteile der Beschichtung F enthaltende Suspension zunächst in den Kanal E eingepumpt wird, anschließend entgegen der Einpumprichtung mit einem ersten Absaugstoß abgesaugt wird und dann, nach Umdrehen des Wandflussfiltersubstrates, mit einem zweiten Absaugimpuls in Einpumprichtung abgesaugt wird, **dadurch gekennzeichnet, dass** der zweite Absaugimpuls, gemessen in mbar Unterdruck, größer oder gleich dem ersten Absaugimpuls ist, wobei das Verhältnis der Drücke des ersten zum zweiten Absaugimpuls bevorzugt im Bereich von 0,1 bis 1 liegt

16. Verwendung eines Wandflussfilters gemäß einem oder mehreren der Ansprüche 1 bis 14 zur Minderung schädlicher Abgase eines Verbrennungsmotors.

17. Abgasreinigungssystem, das ein Wandflussfilter gemäß einem oder mehreren der Ansprüche 1 bis 14 und mindestens einen weiteren Katalysator umfasst.
